## Europäisches Patentamt
## European Patent Office
## Office européen des brevets

(19)

(11) Numéro de publication: **0 018 238**
**B1**

(12) # FASCICULE DE BREVET EUROPEEN

(45) Date de publication du fascicule du brevet:
01.02.84

(51) Int. Cl.³: **G 06 F 7/48**

(21) Numéro de dépôt: **80400145.1**

(22) Date de dépôt: **30.01.80**

(54) **Procédé et ensemble de calcul, aléatoirement par excès ou par défaut, pour fournir des résultats de calcul et en déterminer le nombre de chiffres significatifs exacts.**

(30) Priorité: **02.02.79 FR 7902784**

(43) Date de publication de la demande:
**29.10.80 Bulletin 80/22**

(45) Mention de la délivrance du brevet:
**01.02.84 Bulletin 84/5**

(84) Etats contractants désignés:
**AT BE CH DE FR GB IT LU NL SE**

(56) Documents cités:
**PROCEEDINGS OF THE SPRING JOINT COMPUTER CONFERENCE, A.F.I.P.S. Conference Proceedings, vol. 38, 1971, Montvale N.J. US BRIGHT et al.: "A Software system for tracing numerical significance during computer program execution", pages 387-392**
**IEEE Transactions on Computers, Vol. C-22, no. 6, June 1963, pp. 577-586**

(73) Titulaire: **ANVAR Agence Nationale de Valorisation de la Recherche, 13, rue Madeleine Michelis, F-92522 Neuilly-sur-Seine (FR)**

(72) Inventeur: **Vignes, Jean, 13 rue George Sand, F-92500 Reuil-Malmaison (FR)**
Inventeur: **Ung, Vincent, 39ter, avenue des Piliers, F-94210 La Varenne (FR)**

(74) Mandataire: **Joly, Jean Jacques et al, CABINET BEAU DE LOMENIE 55, rue d'Amsterdam, F-75008 Paris (FR)**

EP 0 018 238 B1

### Procédé et ensemble de calcul, aléatoirement par excès ou par défaut, pour fournir des résultats de calcul et en déterminer le nombre de chiffres significatifs exacts

La présente invention concerne un procédé de calcul permettant de fournir des résultats de calcul et d'en déterminer le nombre de chiffres significatifs exacts. La présente invention concerne aussi un ensemble de calcul ayant même objet.

Le domaine d'application de l'invention est celui des calculateurs numériques travaillant sur des nombres représentés en virgule flottante avec mantisse et exposant.

La représentation d'un nombre dans un calculateur se frait à l'aide d'un nombre fini de chiffres significatifs, ce qui entraîne nécessairement une perte de précision. Les calculateurs numériques travaillent en arithmétique avec troncature ou avec arrondi. En troncature, les valeurs des nombres utilisées sont en valeur absolue toujours des valeurs par défaut. En arrondi, les valeurs utilisées sont des valeurs par défaut ou par excès. Dans tous les cas, le résultat est entâché d'erreur.

Pour évaluer l'erreur sur le résultat d'un algorithme, on peut envisager d'estimer, pour chaque opération arithmétique élémentaire, une majorante ou la valeur moyenne de l'erreur. Toutefois, ceci n'est pas utilisable dans la pratique. En effet, si l'on prend à chaque fois la majorante de l'erreur pour les opérations élémentaires de l'algorithme, la valeur estimée de l'erreur sur le résultat final est beaucoup plus grande que sa valeur réelle. Par ailleurs, on ne peut considérer l'estimation moyenne de l'erreur que si les erreurs sont indépendantes pour les différentes opérations élémentaires, ce qui n'est pratiquement jamais le cas dans les algorithmes.

Dans un article de J. M. YOHE intitulé »Roundings in Floating-Point Arithmetic« et publié dans »I.E.E.E. Transactions on Computers, Vol. C-22, No 6, June 1963, pp. 577 — 586, il est décrit une méthode permettant de fournir le résultat exact d'une opération arithmétique grâce à des algorithmes particuliers d'arrondis. A cet effet, il est prévu d'adjoindre à un nombre un digit supplémentaire qui indique l'existence ou la nonexistence de digits non nuls au-delà du digit de poids le plus faible.

Il a par ailleurs été proposé, dans un article de H. S. BRIGHT et al. intitulé »A software system for tracing numerical significance during computer program execution« et paru dans »Proceedings of the Spring Joint Computer Conference« AFIPS Conference Proceedings, Vol. 38, 1971, pp. 387 — 392, d'associer à chaque résultat d'une opération arithmétique effectuée au cours d'un calcul un index spécifiant le nombre de digits significatifs dans ce résultat. Aussi, pour chaque opération arithmétique, un programme particulier est exécuté pour calculer le nombre de digits significatifs dans le résultat à partir du nombre de digits significatifs dans les opérandes, de la nature de l'opération, des valeurs des opérandes, de la précision de la machine, du type d'arrondi effectué et de la précision inhérente au programme.

La présente invention a également pour objet de fournir un procédé permettant de déterminer le nombre de chiffres significatifs dans un résultat, mais le but de l'invention est de permettre cette détermination d'une façon différente, sans modification importante de la procédure de calcul, donc sans introduire de programmes d'arrondi ou de calcul de nombre de bits ou digits significatifs à chaque étape de la procédure.

Ce but est atteint grâce à un procédé tel que défini dans la revendication 1 annexée.

Toute valeur arithmétique a deux représentations machine: l'une par excès, l'autre par défaut. Dans toute opération arithmétique mettant en jeu deux ou plusieurs opérandes, toutes les combinaisons aléatoires des valeurs par défaut ou par excès des opérandes fournissent des résultats représentant tous aussi légitimement le résultat mathématique exact.

Avec le procédé conforme à l'invention, on obtient plusieurs résultats dont on peut élaborer la valeur moyenne et la variance pour estimer l'erreur sur un de ceux-ci.

Les différentes mises en œuvre de la procédure peuvent être effectuées en parallèle dans des unités de calcul différentes. On peut envisager de réaliser plusieurs mises en œuvre successives indépendantes de la procédure dans une même unité de calcul.

Il est généralement suffisant de disposer de trois résultats. Ils peuvent être produits, en effectuant des traitements d'altération au cours de chaque déroulement de la procédure. A titre de variante, un résultat pourra être élaboré en travaillant systématiquement avec des valeurs arrondies par excès, un autre résultat en travaillant avec des valeur arrondies par défaut, le troisième résultat au moins étant obtenu en effectuant les traitements d'altération aléatoire.

Pour éviter un excès d'altérations qui conduirait à l'obtention d'une valeur trop entâchée d'erreur, on ramène à l'état non positif l'information de troncature associée à un nombre, après que ce nombre ait été altéré, que cette altération se soit ou non traduite par l'addition d'un bit de poids le plus faible à la mantisse du nombre.

L'information de troncature est remise à jour après chaque opération dont le résultat est un nombre tronqué.

Dans le cas par exemple d'une addition, si l'un des opérandes est tronqué, il est altéré dans l'unité de calcul et l'information de troncature associée est ramenée à l'état non positif dans l'unité de calcul. Ensuite, l'information de troncature associée à un opérande est ramené à l'état positif dans l'unité de calcul si, au cours de dénormalisation de cet opérande, au moins un des bits décalés à droite et perdus n'est pas nul. Ensuite, on associe une information de troncature positive au résultat, ou l'on altère celui-ci directement, si l'information de troncature associée à l'un des nombres dénormalisés est positive dans l'unité de calcul.

Le traitement d'altération n'affecte pas les données qui sont conservées en dehors de l'unité de calcul.

Dans le cas d'une multiplication (division), le résultat est placé dans un registre double longueur et l'on associe une information de troncature positive au résultat normalisé si au moins un bit n'est pas nul parmi ceux du registre étendu qui sont supprimés à droite lors de la normalisation.

D'une façon plus générale, on fait passer l'information de troncature à l'état positif si une information non nulle est perdue lors d'une réduction de format.

L'invention a aussi pour but de fournir un ensemble de calcul qui met en œuvre le procédé défini ci-dessus.

Ce but est atteint par un ensemble de calcul tel que défini dans la revendication 8 annexée.

Selon une particularité de l'ensemble de calcul conforme à l'invention, il comporte plusieurs unités de calcul fonctionnant en parallèle, ayant des séquenceurs élémentaires de commande reliés à une unité de commande générale commune et associés à des générateurs de signaux aléatoires distincts respectifs fonctionnant indépendamment les uns des autres.

Selon une autre particularité de l'ensemble de calcul conforme à l'invention, il comporte un circuit d'élaboration d'information de troncature relié au registre de résultat pour associer une information de troncature à chaque résultat d'opération élémentaire.

D'autres particularités et avantages du procédé et de l'ensemble de calcul conformes à l'invention ressortiront à la lecture de la description faite ci-après à titre indicatif, mais non limitatif, en référence aux figures des dessins joints qui illustrent:

— figure 1: une représentation très schématique d'un ensemble de calcul conforme à l'invention,

— figure 2: un schéma plus détaillé d'une unité de calcul de l'ensemble de calcul illustré par la figure 1, et,

— figures 3 et 4: des organigrammes relatifs au déroulement d'opérations arithmétiques dans l'ensemble de calcul de la figure 1.

Dans la représentation des nombres en virgule flottante, ceux-ci comprennent une mantisse et un exposant. La mantisse comporte n positions, n étant un nombre correspondant au format utilisé dans le calculateur numérique.

Lorsque ce nombre n est insuffisant pour la représentation exacte d'une nombre réel, celui-ci est tronqué dans la représentation qui en est utilisée dans le calculateur numérique. Les opérations effectuées sur les nombres tronqués donnent des résultats inexacts, et même parfois aberrants.

Conformément à l'invention, on réalise plusieurs fois une même procédure en effectuant des altérations, ce de façon indépendante pour toutes les mises en œuvre de cette procédure. L'altération consiste, pour chaque donnée tronquée, à prendre de façon aléatoire sa valeur par défaut ou sa valeur par excès en ajoutant aléatoirement un 0 ou un 1 au dernier bit de la mantisse.

A cet effet, on associe à chaque donnée numérique une information de troncature, consistant en l'état d'une position binaire supplémentaire dans la représentation en virgule flottante du nombre. Cette représentation est la suivante.

| SM | M | SE | E | T |

où SM représente le signe de la mantisse,
M, la mantisse,
SE, le signe de l'exposant,
E, l'exposant, et
T, le bit de troncature.

Ce mode de représentation vaut tant en mode complément à 1 qu'en mode complément à deux. Dans ce dernier cas, le bit de troncature est associé au couple (SM, M) qui est une représentation en complément à deux de la mantisse, et au couple (SE, E), qui est une représentation en complément à deux de l'exposant.

L'exposant et son signe associé peuvent être remplacés par la technique classique de l'exposant biaisé.

On admettra dans ce qui suit que le bit de troncature est 0 lorsque le nombre n'est pas tronqué, et 1 lorsque le nombre est tronqué.

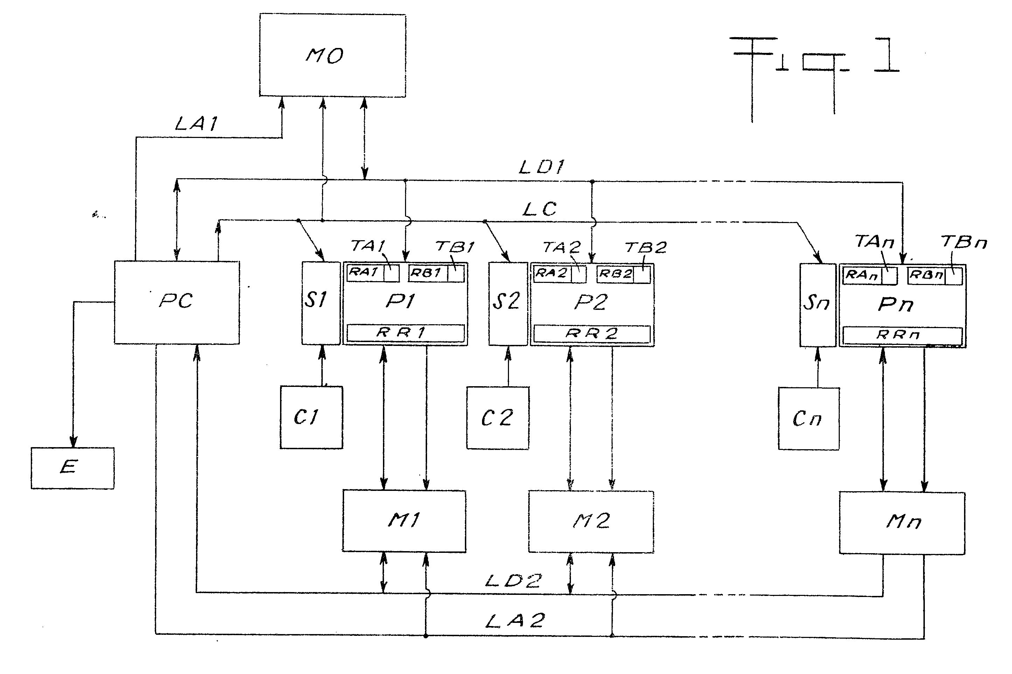

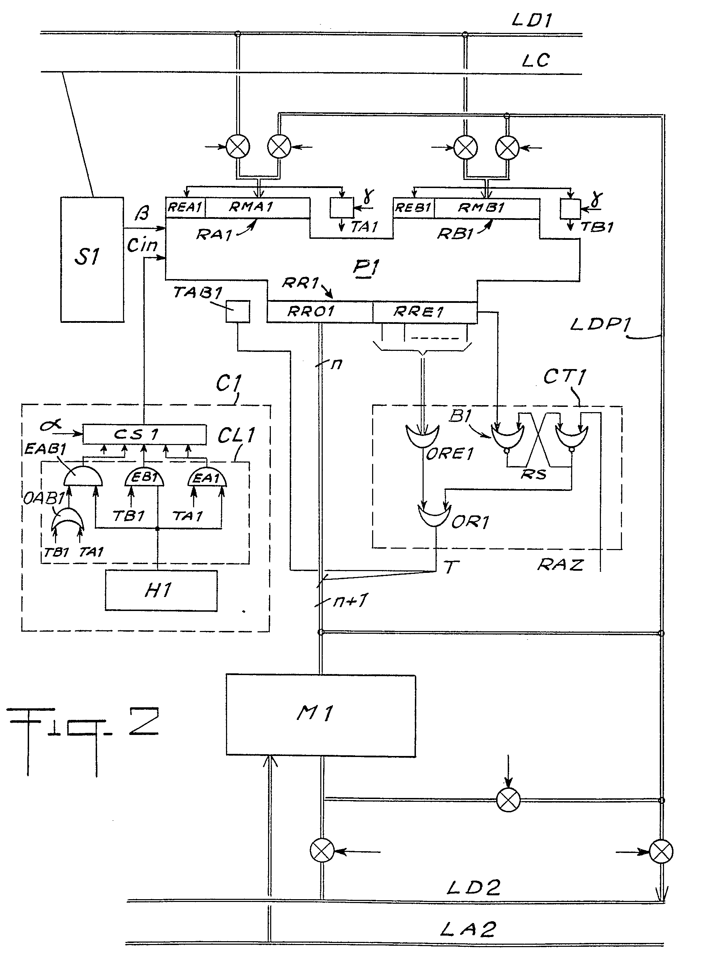

Le procédé conforme à l'invention peut être mis en œuvre au moyen de l'ensemble de calcul représenté par les figures 1 et 2.

Une mémoire M0 contient une procédure à effectuer, procédure consistant en une suite d'opérations algébriques à exécuter.

La mémoire M0 est interconnectée avec des unités de calcul P1, P2, . . . Pn par l'intermédiaire d'une liaison LD1 formant bus de données. Chaque unité de calcul est constituée par on opérateur connu en soi et effectuant les opérations arithmétiques simples. Deux registres de données RA1−RB1, RA2−RB2, . . . RAn−RBn, sont associées à chaque opérateur P1, P2, . . . Pn, ainsi qu'un registre de résultat, respectivement RR1, RR2, . . . RRn. Chaque registre de résultat est relié à une mémoire privée, respectivement M1, M2, . . . Mn associée à chaque opérateur. Les sorties des mémoires privées sont interconnectées avec un bus de données LD2.

Chaque unité de calcul P1, P2, . . . Pn comportant un organe de commande élémentaire ou séquenceur élémentaire S1, S2, . . . Sn qui est intégré à l'unité de calcul. Les séquenceurs sont représentés à l'extérieur des unités de calcul sur les figures 1 et 2, uniquement pour la clarté du dessin.

Conformément à l'invention, une position binaire supplémentaire TA1, TB1, TA2, TB2, ... TAn, TBn est adjointe à chaque registre de données RA1, RB1, RA2, RB2, ... RAn, RBn. Dans cette position binaire supplémentaire, matérialisée par exemple par une bascule, est placé le bit de troncature T associé au nombre qui est introduit dans le registre de donnée correspondant.

Chaque registre de résultat (par exemple le registre RR1 de l'opérateur P1 — figure 2), est, comme connu en soi, un registre de double longueur, c'est-à-dire comportant une première partie RRO1 de format normal et un registre étendu RRE1 du même format.

Conformément à l'invention, un circuit CT1 d'élaboration d'information de troncature est associé au registre de résultat RR1.

Le circuit CT1 comporte un circuit »OU« ORE1 dont les entrées reçoivent les différents bits du registre étendu RRE1, et une bascule B1 de type RS dont une entrée est reliée à la sortie série du registre étendu RRE1. La seconde entrée de la bascule B1 et reliée à une commande de remise à zéro RAZ. Les sorties des circuits ORE1 et B1 sont reliées à un circuit »OU« OR1 dont la sortie constitue la sortie du circuit CT1. Ce dernier permet ainsi de détecter la perte d'une information, lors d'un décalage à droite du registre étendu ou si cette information située dans un registre étendu n'est pas prise en compte.

L'information de sortie du circuit CT1 est adjointe en TAB1 au contenu de la première partie RRO1 du registre de résultat pour constituer le bit de troncature associé au résultat d'une opération effectuée par l'opérateur P1. Ce bit de troncature peut être immédiatement utilisé pour commander, comme on le verra plus loin, l'altération du résultat. Ce résultat, avec son bit de troncature associé, est disponible sur le bus de données LD2 et peut être stocké dans la mémoire privée M1. Ce même résultat peut aussi être ramené par une ligne de données LDP1 dans un des registres RA1 ou RB1, l'information de troncature associée à ce résultat étant alors placée en TA1 ou TB1. La sortie de la mémoire privée M1 est aussi reliée à la ligne LDP1.

Une unité de commande PC est interconnectée avec les bus de données LD1, LD2 et est reliée à la mémoire commune M0 et aux séquenceurs S1, S2, ... Sn par une liaison LC formant bus de contrôle. Des liaisons LA1 et LA2 formant bus d'adresses relient l'unité de commande PC avec respectivement la mémoire commune M0 et les mémoires privées M1, M2, ... Mn.

Un circuit d'altération C1, C2, ... Cn est associé à chaque opérateur P1, P2, ... Pn, respectivement. Chaque circuit C1, C2, ... Cn comporte un générateur de signaux aléatoires constitué par exemple, comme connu en soi, d'un amplificateur de bruit. Les différents générateurs de signaux aléatoires associés aux opérateurs fonctionnent indépendamment les uns des autres.

Chaque circuit d'altération tel que C1 (figure 2) comporte, en outre, un circuit logique CL1 interposé entre le générateur de signaux aléatoires H1 et un multiplexeur CS1 constituant le circuit de sortie du circuit d'altération.

Chaque circuit logique tel que CL1 du circuit C1 associé à l'opérateur P1 (figure 2) comporte trois portes »ET« à deux entrées EA1, EB1 et EAB1. Une entrée de chacune de ces portes reçoit le signal de sortie du générateur H1. Les autres entrées des portes EA1, EB1 et EAB1 reçoivent respectivement l'information binaire contenue dans TA1, l'information binaire contenue dans TB1 et la sortie du circuit »OU« OAB1 dont les entrées reçoivent les informations binaires contenues dans TA1 et TB1.

Ainsi, le signal de sortie du générateur H1 est appliqué au circuit multiplexeur à entrées multiples CS1 lorsqu'une des conditions suivantes est réalisée: (1) l'information de troncature associée au nombre enregistré dans RA1 est positive, (2) l'information de troncature associée au nombre enregistré dans RB1 est positive, et (3) l'information de troncature associée à au moins l'un quelconque des nombres enregistrés dans RA1 et RB1 est positive. Le circuit CS1 est en position de sélection de EA1 pour la condition (1), de sélection de EB1 pour la condition (2), de sélection de EAB1 pour la condition (3).

Des moyens sont prévus, par exemple au niveau du séquenceur de commande, pour remettre à zéro le bit de troncature associé au nombre lorsque celui-ci a été altéré.

Comme on le verra plus loin, l'unité de commande PC peut contenir un programme servant au calcul de valeur moyenne et d'écart-type effectué sur les résultats finaux fournis par les différentes unités de calcul.

Les déroulements des procédures, les altérations, les mises à jour des bits de troncature et la détermination du nombre de chiffres significatifs exacts dans un résultat final seront décrits ci-après plus en détail.

La commande des unités de calcul s'effectue à deux niveaux.

Au premier niveau, l'unité de commande PC, commune à toutes les unités de calcul, interprète la procédure dans la mémoire commune M0. L'unité de commande PC amène les mêmes données, en même temps, à toutes les unités de calcul et ordonne le calcul. Une nouvelle tâche est commandée par l'unité PC lorsqu'elle a reçu de toutes les unités de calcul la confirmation qu'elles ont terminé la tâche précédente.

Au second niveau, un séquenceur de commande élémentaire S1, S2, ... Sn est associé à chaque unité de calcul P1, P2, ... Pn pour gérer les opérations élémentaires telles que: dénormalisation, altération, normalisation et gestion des bascules de troncature TA1, TB1, TA2, TB2, ... TAn, TBn.

La réalisation des commandes au second niveau est une technique bien connue par l'homme de l'art travaillant sur des techniques microprogrammées. Aussi, on se contentera, ci-après, de décrire les commandes du second niveau spécifiques à l'invention pour l'une des unités de calcul, par exemple l'unité de calcul P1.

Ces commandes proviennent d'une mémoire morte ou d'une matrice à logique programmable. Les commandes sont produites par plusieurs champs successifs $\alpha$, $\beta$, $\gamma$, ... de la mémoire ou matrice. Elles peuvent aussi être engendrées par un microprocesseur ou, à la limite, chaque unité de calcul P1, P2, ... Pn avec son organe de commande $\delta 1$, $\delta 2$, ... $\delta n$ peut être un microprocesseur recevant son horloge aléatoire.

On considère par exemple l'opération d'altération de la donnée A introduite dans le registre A1 (de même que dans les registres A2, ... An) sous la commande de l'unité PC.

Le champ $\alpha$ du séquenceur engendre un code de sélection de l'information $TA1 \times H1$, l'état de l'horloge H1 étant aléatoire.

Le champ $\beta$ engendre un code d'opération $A + Cin1$, Cin1 représentant l'état $TA1 \times H1$ et étant appliqué à l'entrée de report. Si $TA1 = 1$ et $H1 = 1$, alors $Cin1 = 1$. Si $TA1 = 1$ et $H1 = 0$, alors $Cin1 = 0$.

Le champ de transfert commande le rangement du résultat aléatoire $A + Cin1$ dans un registre, par exemple RA1.

Le champ $\gamma$ engendre une commande pour la remise à zéro de la bascule TA1 associée au registre RA1 contenant le résultat $A + Cin1$.

L'opération d'altération de la donnée A est alors terminée.

Les autres champs du séquenceur engendrent alors des commandes classiques selon l'opération à effectuer sur la donnée A.

Les commandes sont fournies, au premier niveau, par l'unité de commande PC.

A titre d'exemple, on décrit ci-après des opérations algébriques d'addition et de multiplication de deux nombres A et B. Les opérations sont réalisées par des séquences d'opérations élémentaires commandées simultanément dans les différentes unités de calcul. On considère ci-après uniquement l'unité de calcul P1.

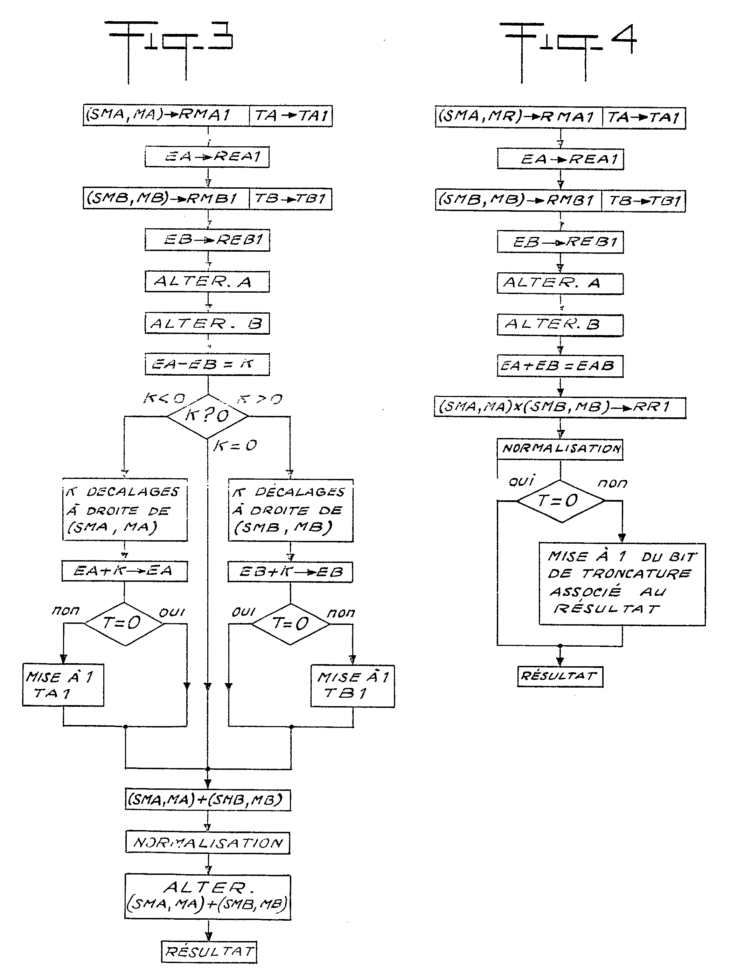

Pour l'opération d'addition de A et B, on se référera à l'organigramme de la figure 3.

Le nombre A est représenté par le signe de sa mantisse et sa mantisse SMA, MA, par le signe de son exposant et son exposant SEA, EA et le bit de troncature TA. De même, le nombre B est représenté par SMB, MB, SEB, EB et TB.

Les opérations suivantes sont effectuées sous la commande de l'unité PC.

— chargement de SMA, MA dans une partie RMA1 du registre RA1 et de TA dans TA1,
— chargement de SEA, EA dans une partie de REA1 du registre RA1,
— chargement de SMB, MB dans une partie RMB1 du registre RB1 et de TB dans TB1,
— chargement de SEB, EB dans une partie REB1 du registre RB1,
— si A tronqué: altération de A, chargement de A altéré dans RA1 et remise à zéro de TA1,
— si B tronqué: altération de B, chargement de B altéré dans RB1 et remise à zéro de TB1,
— détermination de $K = (SEA, EA) - (SEB, EB)$
— comparaison de K à 0:
  — si $K > 0$, réalisation de K décalages à droite de (SMB, MB) (dénormalisation de B), chargement de $EB + K$ dans REB1 et mise à 1 de TB1 si $T = 1$ en sortie de RRE1
  — si $K < 0$, réalisation de K décalages à droite de (SMA, MA) (dénormalisation de A), chargement de $EA + K$ dans REA1 et mise à 1 de TA1 si $T = 1$ en sortie de RRE1
— calcul de $(SMA, MA) + (SMB, MB)$ et normalisation éventuelle,
— altération de $(SMA, MA) + (SMB, MB)$ si TA1 ou $TB1 = 1$, et
— chargement du résultat dans un registre choisi.

On notera qu'à la fin de chaque opération élémentaire, chaque unité de calcul produit un signal de fin d'opération. L'opération élémentaire suivante n'est commandée que lorsque tous les signaux de fin d'opération sont présents. En effet, compte-tenu des altérations, certaines opérations élémentaires (décalages par exemple) peuvent être réalisées avec des durées différentes dans les différentes unités de calcul.

L'organigramme de la figure 4 se rapporte à la multiplication des nombres A et B. Jusqu'aux phases d'altérations éventuelles de A et de B, cet organigramme est le même que celui illustré par la figure 3. Ensuite, les opérations élémentaires suivantes sont effectuées:

— calcul de $EA + EB$ = exposant E AB du résultat
— calcul du produit (SMA, MA) (SMB, MB), le résultat en double longueur (SM AB, M AB) étant disponible dans RR1
— normalisation du résultat
— comparaison de T à 0 et mise à 1 de l'information de troncature associée au résultat si $T = 1$ (à cet effet, on pourra associer une position binaire supplémentaire TAB1 au registre du résultat, celle-ci étant matérialisée par une bascule reliée à la sortie du circuit CT1).

Si cela s'avère nécessaire compte-tenu de la procédure enregistrée dans la mémoire commune M0, chaque résultat d'opération algébrique peut être utilisé comme donnée pour une opération suivante. On notera à ce propos que l'altération du résultat est alors effectuée après son chargement dans un registre de donnée au cas où elle ne l'aurait pas été après élaboration du bit de troncature associé à ce résultat.

Lorsque les résultats définitifs R1, R2, ... Rn des procédures effectuées dans les différentes unités de calcul sont disponibles, on procède au calcul du nombre de chiffres significatifs sur un quelconque de ces résultats, par exemple le résultat R1.

Pour ce faire, l'unité de commande PC fait effectuer, au moyen d'une des unités de commande (par exemple P1) les opérations suivantes:

— calcul de la valeur moyenne

$$\overline{R} = \frac{R1 + R2 + \cdots Rn}{N}$$

N étant le nombre de résultats

— calcul de la variance $\delta^2$ ($\delta$ étant l'écart-type)
— calcul de l'erreur moyenne, estimée suivant la formule

$$\hat{\varepsilon} = \sqrt{(R1 - \overline{R})^2 + \delta^2}$$

ou toute autre formule appropriée d'évaluation statistique

— calcul du nombre C tel que

$$b^{-C} = \frac{\hat{\varepsilon}}{R1}$$

C étant le nombre de chiffres décimaux significatifs exacts dans R1 et b étant la base de numération (b = 10 pour le calcul décimal et b = 2 pour le calcul binaire).

Après élaboration de C, un résultat R peut être affiché, en virgule flottante, avec seulement le nombre C de chiffres significatifs.

Il est généralement suffisant de disposer de trois résultats. Le nombre N d'unités de calcul différentes avec leurs organes associés peut donc être limité à trois.

Comme indiqué plus haut, un des résultats peut être obtenu en travaillant sur des valeurs arrondies systématiquement par défaut et un autre en travaillant sur des valeurs arrondies par excès, étant bien entendu qu'au moins un troisième résultat est élaboré en travaillant avec altération.

Par ailleurs, on peut effectuer un test de stationarité de la valeur de C en calculant celle-ci sur la base de deux résultats et en comparant cette valeur calculée avec celle élaborée sur la base de trois résultats. Si l'écart entre ces deux valeurs calculées montre une instabilité, au moins un nouveau résultat est calculé, suivant une mise en œuvre avec altération indépendante des mises en œuvre précédentes, jusqu'à ce que la valeur calculée de C soit stationnaire.

Enfin, la ou les unités de calcul pourront travailler, comme connu en soi, en double précision.

**Revendications**

1. Procédé pour déterminer le nombre de chiffres significatifs exacts d'un résultat de calcul effectué au moyen d'un calculateur numérique suivant une procédure comportant des opérations élémentaires effectuées sur des nombres représentés en virgule flottante avec mantisse et exposant, procédé selon lequel on associe à chaque donnée numérique une information de troncature positive ou non selon que la valeur réelle de la donnée est ou non tronquée dans la représentation numérique utilisée pour cette donnée, caractérisé en ce que:

— on effectue plusieurs fois ladite procédure, en faisant subir un traitement d'altération à chaque nombre ayant une information de troncature positive, au cours d'au moins une des mises en œuvre de la procédure et ce indépendamment des autres mises en œuvre, ledit traitement d'altération consistant à ajouter éventuellement et aléatoirement un bit de poids le plus faible à la mantisse du nombre, et
— on élabore la valeur moyenne arithmétique et l'écart-type des résultats fournis par les mises en œuvre de la procédure pour déterminer le nombre de chiffres significatifs exacts recherché.

2. Procédé selon la revendication 1, caractérisé en ce qu'après avoir fait subir ledit traitement d'altération à un nombre, on fait passer son information de troncature à l'état non positif.

3. Procédé selon l'une quelconque des revendications 1 et 2, caractérisé en ce que, dans le cas de dénormalisation d'un nombre par décalage à droite des bits de sa mantisse, on fait passer à l'état positif l'information de troncature associée à ce nombre si l'un des bits décalés et perdus n'est pas nul.

4. Procédé selon l'une quelconque des revendications 1 à 3, caractérisé en ce que, dans le cas de l'addition de deux nombres, on fait passer à l'état positif l'information de troncature associée au résultat ou on fait subir un traitement d'altération au résultat si l'une au moins des informations de troncature associées aux nombres additionnés était positive.

5. Procédé selon l'une quelconque des revendications 1 à 4, caractérisé en ce que, dans le cas de réduction de format par suppression de bits à droite de la la mantisse, on fait passer à l'état positif l'information de troncature associée à ce nombre si l'un des bits supprimés n'est pas nul.

6. Procédé selon l'une quelconque des revendications 1 à 5, caractérisé en de que l'on exécute ladite procédure en parallèle dans plusieurs calculateurs identiques distincts.

7. Procédé selon l'une quelconque des revendications précédentes, caractérisé en ce que l'on effectue au moins trois mises en œuvre de ladite procédure.

8. Ensemble de calcul pour déterminer le nombre de chiffres significatifs exacts d'un résultat de calcul effectué suivant une procédure comportant des opérations réalisées sur des nombres représentés en virgule flottante avec mantisse et exposant, cet ensemble comportant: une mémoire dans laquelle est enregistrée une procédure comprenant une ou plusieurs opérations élémentaires; au moins une unité de calcul reliée à la mémoire et comprenant au moins un registre de donnée et un registre de résultat, une position binaire supplémentaire étant associée au ou à chaque registre de donnée, pour stocker une information de troncature positive ou non selon que la valeur numérique réelle de la donnée enregistrée dans le registre est ou non tronquée dans la représentation de cette donnée figurant dans ledit registre; et une unité de commande principale reliée à la mémoire et à l'unité de calcul pour commander l'exécution de ladite procédure dans l'unité de calcul, ledit ensemble de calcul étant caractérisé en ce qu'il comporte en outre:

— un circuit d'altération (C1; ...; Cn) associé à l'unité de calcul et comprenant un générateur de signaux aléatoires pour ajouter ou non de façon aléatoire à chaque nombre introduit dans le registre de donnée (RA1, RB1; ...; RAn, RBn) un bit de poids le plus faible lorsque l'information de troncature associée à ce nombre est positive, et
— des moyens d'enregistrement de résultats produits par différentes mises en œuvre de ladite procédure et des moyens de calcul de la valeur moyenne et de l'écart-type desdits résultats pour déterminer le nombre de chiffres significatifs exacts recherché.

9. Ensemble de calcul selon la revendication 8, caractérisé en ce qu'il comporte plusieurs unités de calcul (P1, ... Pn) fonctionnant en parallèle, reliées à une unité de commande principale commune (PC) et associées à des générateurs de signaux aléatoires distincts respectifs fonctionnant indépendamment les uns des autres.

10. Ensemble de calcul selon l'une quelconque des revendications 8 et 9, caractérisé en ce qu'il comporte un circuit (CT1) d'élaboration d'information de troncature relié au registre de résultat (RR1) pour associer une information de troncature (T) à chaque résultat d'opération effectuée par la ou chaque unité de calcul (P1).

**Patentansprüche**

1. Verfahren zum Bestimmen der Anzahl an exakten signifikanten Ziffern eines Rechenresultats, das mittels eines numerischen Rechners nach einem Verfahren ermittelt wurde, welches anhand von Zahlen in Gleitkommadarstellung mit Mantisse und Exponenten durchgeführte Elementaroperationen umfaßt, bei welchem Verfahren jeder numerischen Angabe eine positive oder nicht positive Abbrechinformation zugeordnet wird, je nachdem, ob der Realwert der Angabe in der für diese Angabe verwendeten numerischen Darstellung abgebrochen ist oder nicht, dadurch gekennzeichnet, daß:

— dieses Verfahren mehrmals durchgeführt wird, indem jede Zahl mit positiver Abbrechinformation im Verlauf von zumindest einem der Durchgänge des Verfahrens und unabhängig von den anderen Durchgängen einer Änderungsbehandlung unterworfen wird, wobei die Änderungsbehandlung darin besteht, daß der Mantisse der Zahl gegebenenfalls und zufällig ein geringstes Stellenwertbit hinzugefügt wird und
— der arithmetische Mittelwert und die Standardabweichung dieser in den Durchgängen des Verfahrens erbrachten Resultate zum Bestimmen der gesuchten Anzahl an exakten signifikanten Ziffern verarbeitet wird.

2. Verfahren nach Anspruch 1, dadurch gekennzeichnet, daß nach Durchführung der Änderungsbehandlung an einer Zahl ihre Abbrechinformation in den nicht positiven Status übergehen lassen wird.

3. Verfahren nach einem der Ansprüche 1 und 2, dadurch gekennzeichnet, daß im Fall der Denormalisierung einer Zahl durch Verschiebung der Bits ihrer Mantisse nach rechts die dieser Zahl zugehörige Abbrechinformation in den positiven Status übergehen lassen wird, wenn einer der verschobenen und verlorenen Bits nicht Null ist.

4. Verfahren nach einem der Ansprüche 1 bis 3, dadurch gekennzeichnet, daß im Fall der Addition zweier Zahlen die dem Resultat zugeordnete Abbrechinformation in den positiven Status übergehen lassen wird oder das Resultat einer Änderungsbehandlung unterzogen wird, wenn zumindest eine der den addierten Zahlen zugeordneten Abbrechinformationen positiv war.

5. Verfahren nach einem der Ansprüche 1 bis 4, dadurch gekennzeichnet, daß im Fall einer Reduktion des Formats durch Unterdrückung von Bits rechts von der Mantisse die dieser Zahl zugeordnete Abbrechinformation in den positiven Status übergehen lassen wird, wenn eines der unterdrückten Bits nicht Null ist.

6. Verfahren nach einem der Ansprüche 1 bis 5, dadurch gekennzeichnet, daß das Verfahren parallel in mehreren separaten, identischen Rechnern durchgeführt wird.

7. Verfahren nach einem der vorhergehenden Ansprüche, dadurch gekennzeichnet, daß zumindest drei Durchgänge des Verfahrens ausgeführt werden.

8. Rechensystem zum Bestimmen der Anzahl an exakten signifikanten Ziffern eines Rechenresultats, das nach einem anhand von Zahlen in Gleitkommadarstellung mit Mantisse und Exponenten durchgeführte Elementaroperationen umfassenden Verfahren ermittelt wurde, mit einem Speicher, in dem ein eine oder mehrere Elementaroperationen umfassendes Verfahren gespeichert ist; zumindest einer mit dem Speicher verbundenen und zumindest ein Datenregister und ein Resultatregister umfassenden Recheneinheit, wobei eine zusätzliche binäre Position an das bzw. jedes Datenregister zum Speichern einer positiven oder nicht positiven Abbrechinformation, je nachdem, ob der numerische Realwert der im Register gespeicherten Angabe in der im Register aufscheinenden Darstellung dieser Angabe abgebrochen ist oder nicht, angeschlossen ist; und mit einer mit dem Speicher und der Recheneinheit verbundenen Hauptsteuereinheit zum Steuern der Durchführung des Verfahrens in der Recheneinheit, dadurch gekennzeichnet, daß sie weiters folgendes umfaßt:

— einen der Recheneinheit zugeordneten und einen Zufallsignalgenerator umfassenden Änderungskreis (C1; . . .; Cn) zum zufälligen Hinzufügen eines geringsten Stellenwertbits zu jeder in das Datenregister (RA1, RB1; . . .; RAn, RBn) eingegebenen Zahl oder nicht, wenn die dieser Zahl zugehörige Abbrechinformation positiv ist, und
— Mittel zum Speichern von in verschiedenen Durchgängen des Verfahrens erzielten Resultaten und Mittel zum Berechnen des Mittelwerts und der Standardabweichung der Resultate zwecks Bestimmens der gesuchten Anzahl an exakten signifikanten Ziffern.

9. Rechensystem nach Anspruch 8, dadurch gekennzeichnet, daß es mehrere parallel arbeitende, mit einer gemeinsamen Hauptsteuereinheit (PC) verbundene und an unabhängig voneinander arbeitende, separate Zufallsignalgeneratoren angeschlossene Recheneinheiten (P1, . . ., Pn) umfaßt.

10. Rechensystem nach einem der Ansprüche 8 und 9, dadurch gekennzeichnet, daß es einen Kreis (CT1) zur Ausarbeitung von Abbrechinformationen umfaßt, der zwecks Zuordnung einer Abbrechinformation (T) zu jedem Resultat aus einer mit der bzw. jeder Recheneinheit (P1) durchgeführten Operation mit dem Resultatregister (RR1) verbunden ist.

## Claims

1. Method of determining the number of exact significant figures in a result from calculation carried out by means of a digital computer according to a procedure including elementary operations carried out upon numbers having a floating point representation with mantissa and exponent, method according to which with every piece of digital data is associated an item of truncation information which is positive or not according to whether the value of this piece of data is or is not truncated in the representation employed for this piece of data, characterized in that:

— the said procedure is carried out a number of times, whilst subjecting each number having a positive truncation information, to an alteration treatment, during at least one carrying out of the procedure and this independently of the other carryings out, the said alteration treatment consisting in adding on occasion and at random a bit of the lowest significance to the mantissa of the number, and;
— the mean arithmetic value and the standard deviation of the results provided by the different carryings out of the procedure are worked out in order to determine the required number of exact significant figures.

2. Method as claimed in claim 1, characterized in that after subjecting a number to the said alteration treatment, the item of truncation information associated with the number ist brought back to the non positive state.

3. Method according to either of claims 1 and 2, characterized in that in the case of denormalization of a number by shifting of the bits of the mantissa to the right, the item of truncation information associated with the number is made to change to the positive state if one of the shifted and lost bits is not zero.

4. A method according to either of the claims 1 to 3, characterized in that in the case of the addition of two numbers, the item of truncation information associated with the result is made to change to the positive state or the result is subjected to an alteration treatment if at least one of the items of truncation information associated with the numbers which have been added was positive.

5. A method according to any one of claims 1 to 4, characterized in that in the case of reduction in format by suppression of bits to the right of the mantissa, the item of truncation information associated with this number is made to change to the positive state if one of the suppressed bits is not zero.

6. A method according to any one of claims 1 to 5, characterized in that the said procedure is performed in parallel in a number of distinct identical computing units.

7. A method according to any one of the preceding claims, characterized in that said procedure is carried out at least three times.

8. A computer assembly for determining the number of exact significant figures in a result from calculation carried out accordint to a procedure including operations effected upon numbers having a floating point representation with mantissa and exponent, this assembly including: a memory in which is recorded an procedure comprising one or more elementary operations; at least one computing unit connected to the memory and comprising at least one data register and one result register, one supplementary binary position being associated with the or each data register, for storing a positive or non poitive item of truncation information according to whether the real numerical value of the data recorded in the register is or is not truncated in the representation of this data appearing in the said register; and one main control unit connected to the memory and to the computing unit to control the performance of said procedure in the computing unit, said computing assembly being characterized in that it further comprises:

— an alteration circuit (C1; ... Cn) associated to the computing unit and comprising a random signal generator whether or not to add randomly to each number introduced into the data register (RA1, RB1, ...; RAn, RBn) a bit of the smallest significance when the truncation information associated to this number is positive, and

— means of recording the results produced by different carryings out of the said procedure and means of calculating the mean value and the standard deviation of said results in order to determine the required number of exact significant figures.

9. A compouter assembly according to claim 8, characterized in thtat it includes a number of computing units (P1, ... Pn) operating in parallel, connected to one common main control circuit unit (PC) and associated with respective distinct random signals generators operating independently of one another.

10. A computer assembly according to any one of claims 8 and 9, characterized in that it includes a circuit (CT1) for working out of truncation information, connected to the result register (RR1) in order to associate an item of truncation information (T) with each result of operation carried out by the or every computing unit (P1).

Fig. 1

Fig. 2

# Fig. 3

| $(SMA, MA) \rightarrow RMA1$ | $TA \rightarrow TA1$ |
|---|---|

$EA \rightarrow REA1$

| $(SMB, MB) \rightarrow RMB1$ | $TB \rightarrow TB1$ |
|---|---|

$EB \rightarrow REB1$

ALTER. A

ALTER. B

$EA - EB = K$

$K < 0$   $K ? 0$   $K > 0$

$K = 0$

| $K$ DECALAGES À DROITE DE $(SMA, MA)$ | $K$ DECALAGES À DROITE DE $(SMB, MB)$ |
|---|---|

$EA + K \rightarrow EA$   $EB + K \rightarrow EB$

non   $T = 0$   oui     oui   $T = 0$   non

MISE À 1 TA1     MISE À 1 TB1

$(SMA, MA) + (SMB, MB)$

NORMALISATION

ALTER.
$(SMA, MA) + (SMB, MB)$

RÉSULTAT

# Fig. 4

| $(SMA, MR) \rightarrow RMA1$ | $TA \rightarrow TA1$ |
|---|---|

$EA \rightarrow REA1$

| $(SMB, MB) \rightarrow RMB1$ | $TB \rightarrow TB1$ |
|---|---|

$EB \rightarrow REB1$

ALTER. A

ALTER. B

$EA + EB = EAB$

$(SMA, MA) \times (SMB, MB) \rightarrow RR1$

NORMALISATION

oui   $T = 0$   non

MISE À 1 DU BIT DE TRONCATURE ASSOCIÉ AU RÉSULTAT

RÉSULTAT